# EUROPÄISCHE PATENTSCHRIFT

(11) **EP 2 538 024 B1**
(45) Veröffentlichungstag und Bekanntmachung des Hinweises auf die Patenterteilung: **23.09.2015**
(21) Anmeldenummer: 11171299.8
(22) Anmeldetag: 24.06.2011
(51) Int. Cl.: F01D 5/14, F01D 5/20, F04D 29/32, F04D 29/68

(54) **Schaufel einer Strömungsmaschine**
Blade of a turbomaschine
Aube dans une turbomachine

(43) Veröffentlichungstag der Anmeldung: 26.12.2012
(73) Patentinhaber: ALSTOM Technology Ltd, 5400 Baden (CH)
(72) Erfinder: Hofmann, Willy Heinz, 5406 Baden-Rütihof (CH); Ballmann, Josef, 52076 Aachen (DE)
(74) Vertreter: Alstom Technology Ltd

(56) Entgegenhaltungen:
- EP-A1- 2 202 385
- EP-A2- 1 529 962
- EP-A2- 2 267 275
- WO-A1-2008/082397
- CH-A- 316 898
- FR-A1- 2 935 348
- GB-A- 2 153 918
- GB-A- 2 427 901
- US-A1- 2003 059 309

## Beschreibung

### Technisches Gebiet

Die vorliegende Erfindung betrifft eine Strömungsmaschine mit einer Schaufel gemäss dem Oberbegriff des Anspruchs 1.

### Stand der Technik

Aus dem Stand der Technik sind Schaufelblätter bekannt, die sowohl als Laufschaufeln als auch als Leitschaufeln ausgebildet sind, welche in Strömungsmaschinen zum Einsatz gelangen.

Beispielhaft sei hier eine Gasturbine mit einem Verdichter genannt, dessen Rotor eine Anzahl von in Strömungsrichtung angeordneten Verdichterstufen aufweist, welche in Umfangsrichtung aus einer Anzahl Verdichterschaufeln bestehen.

In der Regel ist es so, dass die Laufschaufeln keine Deckbänder aufweisen. Solche Deckbänder sind eher bei Leitschaufeln anzutreffen.

In einer solchen Strömungsmaschine entstehen konzentrierte Wirbel, die in dreidimensionalen Strömungsfeldern mit einer Hauptströmungsrichtung an den Ablösekanten durch Aufrollen entstehen und stromab in ein Gebiet höheren Drucks verlaufen. Solche konzentrierten Wirbel verursachen durch Interaktion mit dem Druckfeld grössere Gebiete mit ungeordneter Strömung, was die Leistung der Strömungsmaschine erheblich beeinträchtigt. Zudem wird der Massendurchsatz des Strömungsmediums erheblich reduziert, was die Leistung weiter verringert.

Zur Verminderung dieser nachteiligen Wirkungen kennt der Stand der Technik eine Reihe von Lösungsvorschlägen.
So hat die Druckschrift GB 2427901 einen Propeller für ein Flugtriebwerk zum Gegenstand. Unter bestimmten Einsatzbedingungen während des Betriebs bilden sich instationäre Druckwellen aus, in deren Folge es im Bereich der Propellerspitzen zu erheblichen Vibrationen kommt, die zur Bildung von Rissen innerhalb des Propelterblatts führen können und damit dessen Lebensdauer signifikant verringern. Zur Verminderung dieses unerwünschten Effekts schlägt diese Veröffentlichung vor, die Propellerspitze innerhalb eines Bereichs zwischen etwa 40% bis 60% der Sehnenlänge mit einer Druck- und Saugseite verbindenden Vertiefung, etwa 0,5% bis 1,5% der Sehnenlänge entsprechend, zu versehen. Die Nut behindert die Druckwellenausbreitung.

Das Dokument FR 2935348 bezieht sich auf Strukturmerkmale der Propellerspitzen eines Flugtriebwerks mit zwei gegenläufigen Propellerstufen. Zur Verminderung bzw. Modifizierung der unerwünschten Wirbelbildung an der Propellerspitze schlägt dieses Dokument eine sägezahnartige Struktur über die gesamte Propellerspitze vor. Die gegenseitige Beeinflussung der benachbarten Propellerstufen wird auf diese Weise signifikant verringert.

Die Druckschrift US 2003/059309 beschreibt eine Schaufel eines Flugtriebwerks, insbesondere des Kompressors in einem solchen Triebwerk. In die Schaufelspitze ist über einen weiten Bereich zwischen Anström- und Abströmkante eine Anzahl von Nuten in Form eines Sägezahnprofils eingearbeitet. Das Profil an der Schaufelspitze soll während des Betriebs die Verteilung der Leckströmung entlang der Schaufelsehne beeinflussen und ein Überströmen von Arbeitsmedium erleichtern. Unerwünschte Druckverluste infolge Wirbelbildung und deren Wechselwirkung mit der Hauptströmung werden vermindert.

### Darstellung der Erfindung

Der Erfindung, wie sie in den Ansprüchen gekennzeichnet ist, liegt die Aufgabe zugrunde, bei einer Strömungsmaschine Vorkehrungen vorzuschlagen, welche das Ausmass der ungeordneten Strömung minimieren und die Leistung der Strömungsmaschine maximieren.

Erfindungsgemäß wird diese Aufgabe durch eine Strömungsmaschine mit den Merkmalen des unabhängigen Patentanspruchs gelöst. Den Erfindungsgedanken vorteilhaft weiterbildende Ausführungsarten sind Gegenstand der abhängigen Ansprüche.

Demnach umfasst die Strömungsmaschine mindestens eine Schaufel, deren Schaufelblatt eine Vorderkante, eine Hinterkante sowie eine druckseitige und eine saugseitige Seitenwand umfasst. Die Seitenwände erstrecken sich zwischen der Vorderkante und der Hinterkante des Schaufelblattes und verbinden dieses, wobei sich die durchströmten Seitenwände in der Regel vom betreffenden Schaufelfuss bis zum Schaufelkopf erstrecken. Der Schaufelkopf weist bei einer Laufschaufel in der Regel eine endseitige Stirnfläche auf.

Eine sogenannte Skelettlinie erstreckt sich von der angeströmten Vorderkante zur Hinterkante des Schaufelblattes. Dieses Schaufelblatt umfasst nun mindestens eine stimseitige Ausnehmung, welche in radialer Richtung des Schaufelblattes zur Achse des Rotors hin eine Vertiefung bildet, wobei sich diese Ausnehmung von der druckseitigen bis hin zur saugseitigen Seitenwand erstreckt, also sich durchgehend über die ganze Dicke des Schaufelblattes erstreckt, dergestalt, dass diese Ausnehmung am betreffenden Ort eine Vertiefung zwischen der druckseitigen Seitenwand mit der saugseitigen Seitenwand bildet.

Die Strömungsmaschine umfasst eine Innenwand, zu welcher die Schaufel, mit ihrer Stirnfläche in einem Abstand S eine Relativbewegung ausführt.
Die Ausnehmung besitzt dabei eine Tiefe, welche dem 0,3- bis 0,7-fachen des Abstands zwischen der Innenwand und der Stirnfläche entspricht.
Der Anfang der Ausnehmung in Strömungsrichtung ist von der Vorderkante des Schaufelblattes beabstandet, wobei dieser Abstand 0.5% bis 15% der Länge der

Skelettlinie des Schaufelblattes entspricht.
Die Ausnehmung besitzt eine Länge L im Bereich von 30% bis 55% der Länge der Skelettlinie.

Dabei ist diese Ausnehmung so ausgebildet, dass sie die Strömungsablöselinie unterbricht, so dass das Gebiet ungeordneter Strömung minimiert wird, wodurch die Strömungsverluste ebenfalls minimiert werden können.

Ein solches Schaufelblatt ist mit einer solchen Ausnehmung versehen, wobei eine solche in radialer Richtung eine Erweiterung des Spaltes zwischen der Innenfläche des Stators und dem stirnseitigen Abschluss des Schaufelblattes bildet.

Die Ausnehmung weist gegenüber der Länge der Skelettlinie des Schaufelblattes vorzugsweise eine Länge von 49 % bis 52 % der Länge der Skelettlinie auf.

Bei transsonischen Profilen startet der Wirbel immer direkt hinter der Vorderkante, welche die Anströmkante der Schaufel bildet, so dass der Anfang der Ausnehmung gegenüber der Vorderkante an sich flexibel gehalten werden kann.

Die Ausnehmung stellt, wie bereits erläutert, stirnseitig des Schaufelblattes eine durchgehende radiale Vertiefung dar,
So gesehen bildet sich zwischen Statorinnenfläche und Stirnfläche des Schaufelblattes der Laufschaufel im Bereich der Ausnehmung eine intermediäre Spalterweiterung, welche die beschriebenen Vorteile induziert.

Vorzugsweise weist die Ausnehmung eine Vertiefung auf, welche 50% der Distanz von der strömungsseitigen Fläche des Stators bis zum kopfseitigen Ende des Schaufelblattes entspricht.

Aufgabengemässe vorteilhafte Ausführungen sind in den abhängigen Ansprüchen gekennzeichnet.

### Kurze Beschreibung der Figuren

Alle für das unmittelbare Verständnis der Erfindung nicht erforderlichen Elemente sind weggelassen worden. Gleiche Elemente sind in den verschiedenen Figuren mit den gleichen Bezugszeichen versehen. Die Figuren zeigen:
- Fig. 1: eine schematische Perspektivansicht einer Ausführungsform eines Schaufelblattes gemäss der vorliegenden Erfindung und
- Fig. 2: eine schematische Seitenansicht eines Schaufelblattes nach der Figur 1.

### Wege zur Ausführung der Erfindung, gewerbliche Anwendbarkeit

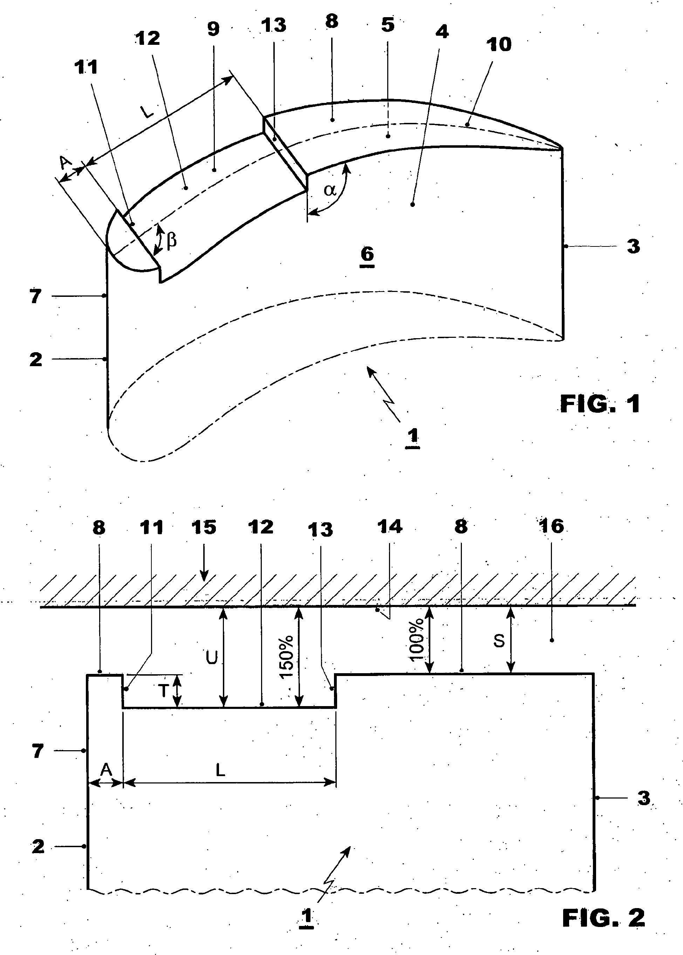

In der Figur 1 wird eine schematische Perspektivansicht einer Ausführungsform eines Kopfabschnittes eines Schaufelblattes 1 gezeigt.

Das Schaufelblatt 1, das hier als Laufschaufel dargestellt ist, umfasst eine Vorderkante bzw. Anströmkante 2, eine Hinterkante bzw. Abströmkante 3, eine druckseitige Seitenwand 4 und eine saugseitige Seitenwand 5. Die saugseitige Seitenwand 5 und die druckseitige Seitenwand 4 erstrecken sich zwischen der Vorderkante 2 und der Hinterkante 3 und bilden somit den Schaufelblattkörper. Die Seitenwände 4, 5 können je nach Anwendungsgebiet verschiedenartig ausgebildet sein. In der vorliegenden Ausführungsform ist die eine Seitenwand 4 konkav ausgebildet, während die andere Seitenwand 5 konvex ausgebildet ist.

Die Vorderkante 2 und die Hinterkante 3 erstrecken sich von einem Fussabschnitt 6, der in der Figur 1 nur ansatzweise gezeigt ist, zu einem Kopfabschnitt 7. Über den Fussabschnitt 6 wird das Schaufelblatt 1 beispielweise mit einer hier nicht gezeigten Rotorwelle verankert. An den Fussabschnitt 6 schliesst sich dann in radialer Richtung der Kopfabschnitt 7 an, welcher hier eine Stirnfläche 8 aufweist. Der Kopfabschnitt 7 weist hier kein Deckband auf. Die Stirnfläche 8 bildet in radialer Richtung den Abschluss des Schaufelblattes 1.

Die Stirnfläche 8 wird durch die daraus entstehenden Schnittkanten und die Seitenwände 4, 5 begrenzt und bildet vorzugsweise eine plane Ebene. Alternativ kann die Stirnfläche 8 je nach Anwendung auch konkav, konvex oder abschnittsweise konkav und konvex, also onduliert, ausgebildet sein.

Ferner erstreckt sich von der Vorderkante 2 bis hin zur Hinterkante 3 eine Skelettlinie 10 des Schaufelblatts 1. Diese Skelettlinie 10 erfüllt im wesentlichen die Funktion einer geometrischen Definitionslinie. Die Länge der Skelettlinie 10 definiert sich durch die entsprechende Distanz von der Vorderkante 2 bis hin zur Hinterkante 3. Die Skelettlinie 10 kann als zentrale Mittellinie, die der Krümmung der beiden Seitenwände 4, 5 folgt, definiert werden.

Das Schaufelblatt 1 umfasst weiterhin eine als Vertiefung ausgebildete Ausnehmung 9, welche sich von der druckseitigen Seitenwand 4 zur saugseitigen Seitenwand 5 erstreckt. Diese Ausnehmung bildet also einen die Saugseite und die Druckseite verbindenden Kanal. Folglich bildet die Ausnehmung 9 einen Durchbruch von der druckseitigen Seitenwand 4 zur saugseitigen Seitenwand 5. Diese Ausnehmung 9 kann mit anderen Worten auch als Kerbe oder Nut, insbesondere als Rechtecknut, bezeichnet werden.

An den Ablösekanten bilden sich, wie eingangs bereits erwähnt, konzentrierte Wirbel, die in dreidimensionalen Strömungsfeldern mit einer Hauptströmungsrichtung an Ablösekanten durch Aufrollen entstehen. Stromab verlaufen diese Wirbel in ein Gebiet höheren Drucks. Diese konzentrierten Wirbel können durch Interaktion mit dem Druckfeld grössere Gebiete mit ungeordneter Strömung verursachen und den gewünschten Massendurchsatz des Strömungsmediums erheblich reduzieren, was in einer Leistungsverminderung der Strömungsmaschine resultiert. Das Ausmass der ungeordneten Strömung kann reduziert werden, indem der Wirbel bereits bei seiner Entstehung gestört wird. Die Ausnehmung 9 unterbricht die Strömungsablöselinie in Strömungsrichtung gesehen kurz hinter dem Beginn der Ablösung und schwächt somit die Interaktion mit dem Druckfeld, verkleinert das Gebiet ungeordneter Strömung und reduziert so die Strömungsverluste.

Insbesondere bei einem Verdichter einer Strömungsmaschine wird der Wirkungsgrad besonders vorteilhaft gesteigert. Die technische Lehre kann im transsonischen Bereich eingesetzt werden.

Die in der Figur 1 gezeigte Ausnehmung 9 wird durch eine vordere Wandung 11, eine Grundfläche 12 und eine hintere Wandung 13 begrenzt.

Die vordere Wandung 11 und die hintere Wandung 13 erstrecken sich hier im wesentlichen senkrecht zur Stirnfläche 8 und sind hier als ebene oder plane Flächen ausgebildet. Folglich ist der Winkel zwischen der Stirnfläche 8 und dem Verlauf der Wandungen 11 bzw. 13 gemäss Figur 1 90°. Andere Winkelverläufe sind indessen auch möglich, d.h., die vordere Wandung 11 und/oder die hintere Wandung 13 können gegenüber der Stirnfläche 8 jeweils einen spitzen oder stumpfen Winkel aufweisen.

Eine solche Neigung kann auch so ausgebildet sein, dass sich die lichte Weite der Ausnehmung 9 senkrecht zur Skelettlinie 10 mit zunehmender Tiefe der Ausnehmung 9 verkleinert. Der Winkel α ist dann bei dieser Ausführungsform grösser als 90°, vorzugsweise im Bereich vom 90° bis 135°.

Bezüglich der Ausrichtung der vorderen und der hinteren Wandung 11, 13 sei hier angemerkt, dass die vordere Wandung 11 und/oder die hintere Wandung 13 bezüglich der Richtung der Skelettiinie 10 im wesentlichen senkrecht zur Skelettlinie 10 verlaufen. Der Winkel β in der Figur 1, welcher den Winkel zwischen dem entsprechenden Abschnitt der Skelettlinie 10 und der Wandung 11, 13 definiert, ist also vorzugsweise ein Winkel von 90°.

Die Variabilität der Winkel α und β gegenüber der Ausnehmung 9 kann gegenüber den oben genannten Winkelgrössen wechselseitig gestaltet sein.

Alternativ kann die vordere Wandung 11 und/oder die hintere Wandung 13 auch konkav oder konvex ausgebildet sein, wobei sich die entsprechende Konkavität oder Konvexität um eine Achse erstreckt, die parallel zur Oberfläche der jeweiligen Wandung 11, 13 und durch die Skelettlinie 10 verläuft.

Die Grundfläche 12 der Ausnehmung 9 verläuft vorzugweise parallel zur Stirnfläche 8. Die Tiefe der Ausnehmung 9, welche der Distanz in senkrechter Richtung von der Stirnfläche 8 gesehen zwischen Stirnfläche 8 und Grundfläche 12 entspricht, ist bei der parallelen Ausbildung im wesentlichen konstant über die gesamte Grundfläche 12 der Ausnehmung 9.

Alternativ kann die Grundfläche 12 aber auch in einer Richtung geneigt zur Stirnfläche 8 verlaufen, wobei die Neigung so gestaltet sein kann, dass die Tiefe der Ausnehmung 9 in senkrechter Richtung von der Stirnfläche 8 gesehen zwischen Stirnfläche 8 und Grundfläche 12 mit zunehmender Entfernung von der Vorderkante 2 abnimmt. Folglich nimmt die Tiefe der Ausnehmung mit zunehmendem Abstand von der Vorderkante 2 ab.

Bezüglich der hinteren Wandung 13 sei hier angemerkt, dass diese im Falle einer geneigt ausgebildeten Grundfläche 12 auch wegfallen könnte, wenn die Grundfläche 12 durch eben diese Schräge direkt in die Stirnfläche 8 übergeht.

Die Ausnehmung 9 ist von der Vorderkante 2 her gesehen mit einem Abstand A beabstandet angeordnet. Der Abstand A entspricht einer Länge im Bereich von 0.5% bis 1.5% der Länge der Skelettlinie 10 des Schaufelblattes 1.

Eine weitere entscheidende Positionierung des Anfangs der Ausdehnung 9 gegenüber der Vorderkante 2 der Schaufel lässt sich wie folgt definieren:
Bei transsonischen Profilen startet der Wirbel immer direkt hinter der Vorderkante 2, welche die Anströmkante der Schaufel bildet, so dass der Anfang der Ausnehmung 9 gegenüber der Vorderkante 2 an sich flexibel gehalten werden kann.

Die Ausnehmung 9 erstreckt sich entlang einer Länge L in Richtung der Skelettlinie 10. Die Länge L weist besonders vorzugsweise ein Mass auf, welches dem Bereich von 49 % bis 52 % der Länge der Skelettlinie 10 des Schaufelblattes entspricht. Auch hier sind je nach Anwendungszweck ebenfalls andere Bereiche denkbar im erfindungsgemäßen Bereich von 30% bis 55% der Länge der Skelettlinie 10.

In der Figur 2 wird eine schematische Ansicht eines Schaufelblattes in einer Strömungsmaschine 15 von der Seite gezeigt.

Typischerweise umfasst eine Strömungsmaschine 15 eine Innenwand 14, zu welcher sich die Schaufel um eine Rotationsachse, welche hier parallel zur Innenwand 14 verlaufen würde, relativ bewegt.

Um den oben beschriebenen Effekt der Verminderung der ungeordneten Strömung zu erwirken, hat es sich als besonders vorteilhaft erwiesen, wenn die Tiefe der Ausnehmung 9 in einem bestimmten Verhältnis zum Spalt 16 zwischen Innenwand 14 und Stirnfläche 8 gewählt wird. Der Spalt 16 weist eine Distanz S zwischen der Stirnfläche 8 und der Innenwand 14 auf. Die Distanz S definiert sich als lichte Weite zwischen Stirnfläche 8 und Innenwand 14 senkrecht zur Rotationsachse des Schaufelblattes 1 gesehen. Die Distanz U definiert die lichte Weite zwischen der Grundfläche 12 der Ausnehmung und setzt sich im wesentlichen aus der Tiefe T der Ausnehmung und der Distanz S zusammen.

Bei der Ausnehmung 9 handelt es sich gewissermassen um eine Erweiterung des Spaltes zwischen der Innenwand 14 des Gehäuses der Strömungsmaschine 15 und der Stirnfläche 8 des Schaufelblattes. Die Innenwand 14 hat typischerweise eine hohlzylindrische Oberfläche und der Spalt definiert sich dabei zwischen dieser Oberfläche und der Stirnfläche 8 bzw. der Ausnehmung 9. Im Bereich der Ausnehmung 9 wird dann diese Spalterweiterung bereitgestellt.

Erfindungsgemäß wird die Distanz U um einen Faktor im Bereich von 1.3 bis 1,7, bevorzugt um einen Faktor von 1.5, grösser als die Distanz S gewählt. Folglich entspricht die Distanz U 130% bis 170%, insbesondere 150%, der Distanz S. Bezüglich der Tiefe heisst dies, dass diese um einen Faktor 0.3 bis 0.7, insbesondere um einen Faktor 0.5, kleiner ist, als die Distanz S.

### Bezugszeichenliste

- 1: Schaufelblatt
- 2: Vorderkante, Anströmkante
- 3: Hinterkante, Abströmkante
- 4: druckseitige Seitenwand
- 5: saugseitige Seitenwand
- 6: Fussabschnitt
- 7: Kopfabschnitt
- 8: Stirnfläche
- 9: Ausnehmung
- 10: Skelettlinie,
- 11: vordere Seitenwand
- 12: Grundfläche
- 13: hintere Seitenwand
- 14: Innenwand vom Gehäuse der Strömungsmaschine
- 15: Strömurigsmaschine
- 16: Spalt
- A: Abstand
- L: Länge der Ausnehmung
- S: Lichte Weite des Spaltes
- T: Tiefe der Ausnehmung
- U: Lichte Weite des Spaltes plus Tiefe der Ausnehmung

## Patentansprüche

1. Strömungsmaschine mit mindestens einer Schaufel, welche Schaufel im wesentlichen aus einem Schaufelblatt (1) besteht, welches eine anströmungsseitige Vorderkante (2), eine abströmungsseitige Hinterkante (3) sowie eine Druckseite (4) und eine Saugseite (5) umfasst, deren Flächen (4, 5) sich zwischen der anströmungsseitigen Vorderkante (2) und der abstömungsseitigen Hinterkante (3) erstrecken, wobei sich das Schaufelblatt (1) in radialer Richtung im Wesentlichen von einem Schaufelfuss bis zu einem Schaufelkopf erstreckt, wobei der Schaufelkopf eine Stirnfläche (8) mit einer Skelettlinie (10) aufweist, welche sich von der anströmungsseitigen Vorderkante (2) bis zur abströmungsseitigen Hinterkante (3) erstreckt, und das Schaufelblatt (1) mindestens eine kopfseitige Ausnehmung (9) aufweist, welche von der Stirnfläche (8) in das Schaufelblatt (1) eine Vertiefung bildet, welche von der Druckseite (4) bis hin zur Saugseite (5) durchgehend ist, und welche eine Teillänge der Sketettiinie (10) aufweist, und die Strömungsmaschine (15) eine Innenwand (14) umfasst, zu welcher die Schaufel mit ihrer Stirnfläche (8) in einem Abstand (S) eine Relativbewegung ausführt, **dadurch gekennzeichnet, dass** die kopfseitige Ausnehmung (9) eine Tiefe (T) besitzt, welche dem 0,3- bis 0,7-fachen der Distanz (S) zwischen der Innenwand (14) und der Stirnfläche (8) entspricht, und dass die Ausnehmung (9) von der Vorderkante (2) her gesehen mit einem Abstand (A) angeordnet ist, wobei der Abstand (A) 0,5% bis 1,5% der Länge der Skelettlinie (10) des Schaufelblattes (1) entspricht, und eine Länge (L) im Bereich von 30% bis 55% der Länge der Skelettlinie (10) aufweist.

2. Strömungsmaschine nach Anspruch 1, **dadurch gekennzeichnet, dass** die Ausnehmung (9) in Richtung der Skelettlinie (10) des Schaufelblattes (1) eine Länge (L) im Bereich von 49% bis 52% der Länge der Skelettlinie (10) aufweist.

3. Strömungsmaschine nach einem der Ansprüche 1 bis 2, **dadurch gekennzeichnet, dass** die Ausnehmung (9) einen Durchbruch von der druckseitigen Seitenwand (4) zur saugseitigen Seitenwand (5) bildet.

4. Strömungsmaschine nach einem der Ansprüche 1 bis 3, **dadurch gekennzeichnet, dass** die Ausnehmung (9) von der Vorderkante (2) in Richtung der Hinterkante (3) versetzt angeordnet ist, so dass im Bereich der Vorderkante (2) die Kontur der Schaufel im wesentlichen unverändert bleibt.

5. Strömungsmaschine nach einem der Ansprüche 1 bis 4, **dadurch gekennzeichnet, dass** die Ausnehmung (9) durch eine vordere Wandung (11), eine Grundfläche (12) und eine hintere Wandung (13) begrenzt wird.

6. Strömungsmaschine nach Anspruch 5, **dadurch gekennzeichnet, dass** die vordere Wandung (11) und/oder die hintere Wandung (13) sich bezüglich der Stirnfläche (8) im wesentlichen senkrecht oder geneigt erstrecken, und/oder dass die vordere Wandung (11) und/oder die hintere Wandung (13) als ebene oder konkave oder konvexe Fläche ausgebildet sind.

7. Strömungsmaschine nach Anspruch 5, **dadurch gekennzeichnet, dass** die vordere Wandung (11) und/oder die hintere Wandung (13) im wesentlichen senkrecht zur Richtung der Skelettlinie (10) im Bereich des Schnittpunktes zwischen Skelettlinie (10) und Wandung (11, 13) verläuft.

8. Strömungsmaschine nach Anspruch 5 **dadurch gekennzeichnet, dass** die Grundfläche (12) der Ausnehmung (9) parallel zur Stirnfläche (8) verläuft, oder dass die Grundfläche geneigt zur Stirnfläche (8) verläuft und die Neigung so beschaffen ist, dass die Distanz zwischen Stirnfläche (8) und Grundfläche (12) mit zunehmender Entfernung von der Vorderkante (2) abnimmt.

9. Strömungsmaschine nach einem der Ansprüche 1 bis 8, **dadurch gekennzeichnet, dass** die Ausnehmung (9) eine Tiefe (T) von 50% der Distanz (S) von der Stirnfläche (8) bis hin zur Innenwand (14) der Strömungsmaschine (15) aufweist.

## Claims

1. Turbomachine having at least one blade, which blade basically comprises a blade airfoil (1) which comprises an inflow-side leading edge (2), an outflow-side trailing edge (3) and also a pressure side (4) and a suction side (5), the surfaces (4, 5) of which extend between the inflow-side leading edge (2) and the outflow-side trailing edge (3), wherein the blade airfoil (1) extends in the radial direction basically from a blade root to a blade tip, wherein the blade tip has an end face (8) with a camber line (10) which extends from the inflow-side leading edge (2) to the outflow-side trailing edge (3), and the blade airfoil (1) has at least one tip-side recess (9) which forms a depression from the end face (8) into the blade airfoil (1), which depression is continuous from the pressure side (4) right through to the suction side (5) and has a partial length of the camber line (10), and the turbomachine (15) an inner wall (14) relative to which the end face (8) of the blade moves at a distance (S), **characterized in that** the tip-side recess (9) has a depth (T) which corresponds to 0.3 to 0.7 times the distance (S) between the inner wall (14) and the end face (8), and **in that** the recess (9), as seen from the leading edge (2), is arranged at a distance (A), wherein the distance (A) corresponds to between 0.5% and 1.5% of the length of the camber line (10) of the blade airfoil (1), and has a length (L) in the range of between 30% and 55% of the length of the camber line (10).

2. Turbomachine according to Claim 1, **characterized in that** the recess (9), in the direction of the camber line (10) of the blade airfoil (1), has a length (L) in the range of between 49% and 52% of the length of the camber line (10).

3. Turbomachine according to either of Claims 1 and 2, **characterized in that** the recess (9) forms a cutout from the pressure-side sidewall (4) to the suction-side sidewall (5).

4. Turbomachine according to one of Claims 1 to 3, **characterized in that** the recess (9) is arranged in an offset manner from the leading edge (2) in the direction of the trailing edge (3) so that in the region of the leading edge (2) the contour of the blade remains basically unaltered.

5. Turbomachine according to one of Claims 1 to 4, **characterized in that** the recess (9) is delimited by a front wall (11), a base surface (12) and a rear wall (13).

6. Turbomachine according to Claim 5, **characterized in that** the front wall (11) and/or the rear wall (13) extend, or extends, basically perpendicularly or in an inclined manner with regard to the end face (8), and/or **in that** the front wall (11) and/or the rear wall (13) are, or is, formed as a flat or concave or convex surface.

7. Turbomachine according to Claim 5, **characterized in that** the front wall (11) and/or the rear wall (13) extend, or extends, basically perpendicularly to the direction of the camber line (10) in the region of the point of intersection between the camber line (10) and the wall (11, 13).

8. Turbomachine according to Claim 5, **characterized in that** the base surface (12) of the recess (9) extends parallel to the end face (8), or **in that** the base surface extends inclined to the end face (8) and the inclination is provided so that the distance between the end face (8) and the base surface (12) decreases with increasing distance from the leading edge (2).

9. Turbomachine according to one of Claims 1 to 8, **characterized in that** the recess (9) has a depth (T) of 50% of the distance (S) from the end face (8) to the inner wall (14) of the turbomachine (15) .

## Revendications

1. Turbomachine avec au moins une aube, aube qui se compose essentiellement d'une pale (1), qui comprend un bord avant (2) côté d'attaque, un bord arrière (3) côté de fuite ainsi qu'un côté de pression (4) et un côté d'aspiration (5), dont les faces (4, 5) s'étendent entre le bord avant côté d'attaque (2) et le bord arrière côté de fuite (3), dans laquelle la pale (1) s'étend en direction radiale essentiellement depuis un pied d'aube jusqu'à une tête d'aube, dans laquelle la tête d'aube présente une face frontale (8) avec une ligne moyenne (10) qui s'étend depuis le bord avant côté d'attaque (2) jusqu'au bord arrière côté de fuite (3), et la pale (1) présente au moins un évidement (9) côté tête, qui forme dans la pale (1) à partir de la face frontale (8) un creux, qui est continu depuis le côté de pression (4) jusqu'au côté d'aspiration (5), et qui présente une longueur partielle de la ligne moyenne (10), et la turbomachine (15) comprend une paroi intérieure (14), par rapport à laquelle l'aube exécute avec sa face frontale (8) un mouvement relatif à une distance (S), **caractérisée en ce que** l'évidement côté tête (9) présente une profondeur (T), qui correspond à 0,3 à 0,7 fois la distance (S) entre la paroi intérieure (14) et la face frontale (8), et **en ce que** l'évidement (9) vu du bord avant (2) est disposé à une distance (A), dans laquelle la distance (A) correspond à 0,5 % à 1,5 % de la longueur de la ligne moyenne (10) de la pale (1), et présente une longueur (L) comprise entre 30 % et 50 % de la longueur de la ligne moyenne (10).

2. Turbomachine selon la revendication 1, **caractérisée en ce que** l'évidement (9) présente, dans la direction de la ligne moyenne (10) de la pale (1), une longueur (L) comprise entre 49 % et 52 % de la longueur de la ligne moyenne (10).

3. Turbomachine selon l'une quelconque des revendications 1 à 2, **caractérisée en ce que** l'évidement (9) forme un passage de la paroi latérale côté de pression (4) à la paroi latérale côté d'aspiration (5).

4. Turbomachine selon l'une quelconque des revendications 1 à 3, **caractérisée en ce que** l'évidement (9) est disposé en position décalée du bord avant (2) en direction du bord arrière (3), de telle manière que le contour de l'aube reste essentiellement inchangé dans la région du bord avant (2).

5. Turbomachine selon l'une quelconque des revendications 1 à 4, **caractérisée en ce que** l'évidement (9) est limité par une paroi avant (11), une face de fond (12) et une paroi arrière (13).

6. Turbomachine selon la revendication 5, **caractérisée en ce que** la paroi avant (11) et/ou la paroi arrière (13) s'étendent de façon essentiellement perpendiculaire ou inclinée par rapport à la face frontale (8), et/ou **en ce que** la paroi avant (11) et/ou la paroi arrière (13) sont configurées en forme de face plane ou concave ou convexe.

7. Turbomachine selon la revendication 5, **caractérisée en ce que** la paroi avant (11) et/ou la paroi arrière (13) s'étendent de façon essentiellement perpendiculaire à la direction de la ligne moyenne (10) dans la région du point d'intersection entre la ligne moyenne (10) et la paroi (11, 13).

8. Turbomachine selon la revendication 5, **caractérisée en ce que** la face de fond (12) de l'évidement (9) est parallèle à la face frontale (8), ou **en ce que** la face de fond est inclinée par rapport à la face frontale (8) et l'inclinaison est fixée de telle façon que la distance entre la face frontale (8) et la face de fond (12) diminue avec l'éloignement croissant du bord avant (2).

9. Turbomachine selon l'une quelconque des revendications 1 à 8, **caractérisée en ce que** l'évidement (9) présente une profondeur (T) de 50 % de la distance (S) de la face frontale (8) à la paroi intérieure (14) de la turbomachine (15).
